# EUROPEAN PATENT SPECIFICATION

(11) **EP 3 747 716 B1**
(45) Date of publication and mention of the grant of the patent: **13.09.2023**
(21) Application number: 19177982.6
(22) Date of filing: 03.06.2019
(51) Int. Cl.: B60T 13/26, B60T 15/02, B60T 13/68, B60T 13/66

(54) **PNEUMATIC VEHICLE AXLE BRAKE ASSEMBLY**
PNEUMATISCHE FAHRZEUGACHSENBREMSANORDNUNG
ENSEMBLE DE FREIN PNEUMATIQUE D'ESSIEU DE VÉHICULE

(43) Date of publication of application: 09.12.2020
(73) Proprietor: Haldex Brake Products Aktiebolag, 261 24 Landskrona (SE)
(72) Inventor: MELLINGS, Carl, Lindley, Warwickshire, CV13 6DE (GB); HARRISON, Dudley, Shirley, Solihull, B90 4YP (GB); HEER, Siegfried, 69168 Wiesloch (DE)
(74) Representative: REHBERG HÜPPE + PARTNER

(56) References cited:
- EP-A1- 1 968 831
- GB-A- 2 535 527
- US-A1- 2005 134 109
- US-A1- 2018 022 334
- US-B2- 8 651 588

## Description

### TECHNICAL FIELD OF THE INVENTION

The present invention relates to a pneumatic vehicle axle brake assembly that can be used in a commercial vehicle as a tractor or a trailer or an agricultural tractor. In the pneumatic vehicle axle brake assembly pivoting anchor valves are used that are for some embodiments denoted as "fast acting brake valves" and which allow a fast aeration and/or de-aeration of the brake actuators allowing in particular an improved slip control and/or a fast application of a vehicle brake.

### PRIOR ART

The patent application with the application number GB 1 719 309.5 discloses a pivoting anchor valve wherein the pivoting anchor does not comprise an actuating plunger cooperating with a valve body of the inlet valve or outlet valve. Instead, here the pivoting anchor has a beam-like flat configuration. In a closed operating state the surface of the pivoting anchor sealingly contacts a valve seat of the housing of the pivoting anchor valve that might comprise a seal member as a rubber O-ring. It is possible that the valve seat is supported by a packer which allows an automatic adjustment of the angle of the valve seat for providing a good seal between the pivoting anchor and the valve seat. The pivoting anchor valve might be a mono-stable valve which takes a defined switching state without energization. This switching state is also denoted as "failsafe mode". Furthermore, the patent application suggests to use additional solenoids instead of permanent magnets for securing a taken switching state of the pivoting anchor valve. The pivoting anchor valve might include a sensor, in particular a hall effect sensor for controlling the electrical power to the solenoid. Electric power might be provided by one or more batteries or one or more electrical generators forming part of the vehicle or the trailer. In the case of using permanent magnets for securing a taken switching position of the pivoting anchor valve one permanent magnet securing a first switching position might be weaker than another permanent magnet being responsible for securing another switching position. The weaker permanent magnet may be supplemented by an electromagnet. For providing the failsafe mode the flexible pivoting anchor might have a predetermined band or curvature towards the switching state forming the failsafe mode. The flexible pivoting anchor might include a laminated section with multiple layers wherein one of the layers might be stressed for providing the predetermined band or curvature.

The patent application with the application number GB 1 904 957.6 proposes to monitor the state of a pivoting anchor valve by use of a monitoring device on the basis of a signal from strain gauges or field effect transistors or a rate of change of current through the electromagnet biasing the pivoting anchor valve with a bending moment. The monitoring device determines whether the pivoting anchor is stuck. For the monitoring the electromagnet can be energized with a test-energization having a predetermined current profile. The monitoring might base on a comparison of the actual current through the electromagnet with an expected current through the electromagnet. It is also possible to analyze an expected variant in the strain gauge output or to compare an actual field effect transistor output with an expected field effect transistor output. It is also proposed to analyze a disturbance in the pulse width of the modulation pattern of the field effect transistor.

Another design of a pivoting anchor valve comprising three ports wherein in a first valve position the first port is open, in a second position the second port is open and in a third position the first port and the second port are closed is disclosed in the patent application GB 1 806 527.6.

The patent application GB 1 719 415.0 discloses a vehicle brake system comprising wheel end units that include a brake torque control unit communicating with a central control unit for controlling an associated brake actuator to apply a braking torque. The wheel end units might also include diagnostics units. Furthermore, a sensor as e.g. a yaw sensor and/or a steering angle sensor can be provided. The wheel end units might comprise at least one pivoting anchor valve that might be controlled by a relay-based modulator. Furthermore, the wheel end units might comprise a wheel speed sensor the output of which is used for a slip control of the associated wheel. Furthermore, the patent application discloses a trailer control module comprising an emergency line restrictor valve being operable to control the flow of pressurized fluid from a reservoir to a supply line in the event of a drop in a pressure in the service line. The trailer control module might communicate with a CANBUS. Also here the use of pivoting anchor valves is proposed.

Also the patent application GB 1 719 344.2 discloses possible designs of a vehicle braking system and a trailer control module including a pivoting anchor valve.

The patent publication EP 2 567 131 B1 discloses a possible design of a pivoting anchor valve, here in particular the design of the coil and a magnetic core of the coil used for providing the bending moment applied to the flexible pivoting anchor and the extension of different sections of the pivoting anchor into the magnetic core, a flexible material forming a section of the pivoting anchor, a magnetic flux container extending circumferentially around permanent magnets and the coil.

Other possible designs of a pivoting anchor valve can be taken from the patent publication EP 1 303 719 B1 and EP 2 756 215 B1**.**

WO 2007/079946 A1 discloses in electro pneumatic vehicle axle brake assembly comprising two circuits. A brake demand is set by the driver by an electronic brake pedal. On the basis of the brake demand the brake pressures in the two brake circuits are controlled by redundant electronic control units. The control units are coupled by an opto-electrical connection to each other. An electronic control signal is processed by brake actuators each being associated to a respective pneumatic brake cylinder. The brake actuator is a pressure control module comprising a relay valve. The control pressure at a control port of the relay valve is controlled by a combination of an inlet valve and an outlet valve embodied as 2/2-way solenoid valves. The inlet valve and the outlet valve are coupled to the control port of the relay valve by a control line. Control lines of brake actuators of different sides of a vehicle axle are coupled to each other by a connecting line with an integrated connecting valve. The connecting valve is integrated into one of the brake actuators, embodied as a 2/2-way solenoid valve and transferred into the closed position by an energization of the same. During a normal operation the connecting line is closed so that a separate control of the brake actuators of the axle is possible. However, in the case of an error leading to the result that the connecting valve as well as the inlet valve and the outlet valve are not energized the inlet valve and the outlet valve are returned by a spring into the closed positions whereas the connecting valve is automatically transferred into the open position. In the open position of the connecting valve it is possible to control the control pressure of the relay valve of one brake actuator by the control pressure in the control line of the other brake actuator.

Further prior art is known from GB 2 535 527 A**,** US 2005/134109 A1**,** US 2018/022334 A1 and US 8,651,588 B2**.**

### OBJECT OF THE INVENTION

It is the object of the present invention to provide a pneumatic vehicle axle brake assembly which is in particular improved with respect to
- the control options,
- the options for generating a yaw moment,
- the options for considering differing coefficients of friction at the wheels on different vehicle sides,
- the options for assisting a steering action,
- the options for considering a failure in a pneumatic brake branch and/or
- providing a redundant brake control or a failsafe brake control.

### SOLUTION

According to the present invention, the object of the invention is solved by the features of the independent claim. Additional preferred embodiments according to the invention are to be seen in the dependent claims.

### DESCRIPTION OF THE INVENTION

The invention relates to a pneumatic vehicle axle brake assembly associated with any axle of the vehicle, so e.g. a front, middle or rear axle of a tractor or a trailer. The inventive pneumatic vehicle axle brake assembly is responsible for providing the suitable brake pressures for the brake actuators on the right side and the left side of the vehicle axle.

In the inventive pneumatic vehicle axle brake assembly there is a right pneumatic brake branch which is associated with a right side of a vehicle axle. The right pneumatic brake branch is used for controlling the brake pressure biasing a right wheel brake actuator. The right pneumatic brake branch comprises a pivoting anchor valve which allows a fast aeration and de-aeration of the brake actuator.

The inventive vehicle axle brake assembly also comprises a left pneumatic brake branch associated with the left side of the vehicle axle. The left pneumatic brake branch is used for controlling the brake pressure biasing a left wheel brake actuator. Also the left pneumatic brake branch comprises a pivoting anchor valve.

The invention proposes that the right pneumatic brake branch and the left pneumatic brake branch are (at least temporarily) not independent on each other. Instead, the right pneumatic brake branch is connected to the left pneumatic brake branch by a valve device. The valve device comprises two valve positions:
In an open position, the valve device provides a fluidic connection of the right pneumatic brake branch to the left wheel brake actuator and/or of the left pneumatic brake branch to the right wheel brake actuator. Accordingly, a "cross control" is possible wherein the right pneumatic brake branch (also) controls the left wheel brake actuator and/or the left pneumatic brake branch (also) controls the right wheel brake actuator. The open position of the valve device can in particular be used in the case that both wheel brake actuators shall be based with the same brake pressure. In this case, the brake pressure can be controlled by the pivoting anchor valves of both pneumatic brake branches or only by the pivoting anchor valve of one of the pneumatic brake branches. Accordingly, in the open position it is also possible to control the wheel brake actuators by the pivoting anchor valve of one pneumatic brake branch in the case of the failure of the other pneumatic brake branch or its pivoting anchor valve.

Furthermore, the valve device comprises a closed position. In the closed position, the right pneumatic brake branch is separated by the valve device from the left wheel brake actuator and/or the left pneumatic brake branch is separated by the valve device from the right wheel brake actuator. Accordingly, the closed position of the valve device allows an independent control of the brake pressures for the left wheel brake actuator and the right wheel brake actuator. This might e.g.be advantageous in the case that different friction forces are intended on the different wheel sides in order to generate a yaw moment or in order to assist a steering action. Furthermore, in the closed position it is possible to individually control the brake pressures and so also the friction forces at the different wheel sides so that it is also possible to consider different coefficients of friction at the different wheel sides.

The valve device used within the frame of the invention might be any single valve or combination of valves that might be integrated into a constructional unit or might be arranged separately and also remote from each other. For one embodiment of the invention, the valve device comprises a 2/2-valve. The 2/2-valve might be a 2/2-solenoid valve which is directly controlled. However, it is also possible that the 2/2-valve is a pilot controlled valve which is pneumatically controlled by a separate solenoid valve. The use of a 2/2-valve as the valve device provides the aforementioned open position and the closed position so that by use of a simple valve design the aforementioned functionality can be provided.

For another proposal of the invention, the valve device comprises a pivoting anchor valve which might also be used for improving the control characteristics and for allowing large flows of pressurized air.

For one inventive pneumatic vehicle axle brake assembly a control device is provided. The control device comprises control logic which comprises two different operating modes:
In a first operating mode, the valve device is controlled by the control device into the open position. In the first operating mode the brake pressure biasing the left wheel brake actuator and the right wheel brake actuator is controlled by at least one of the pivoting anchor valves.

In the second operating mode, the control device controls the valve device into the closed position. In the second operating mode the brake pressure biasing the left wheel brake actuator is controlled by the left pivoting anchor valve whereas the brake pressure biasing the right wheel brake actuator is controlled by the right pivoting anchor valve.

There are different options for the criterion when the control logic is in the first operating mode and in the second operating mode.

For example, the criterion might depend on any operational state of the vehicle, on an environmental parameter or also on a demand or input by the driver or an autonomous driving system. For one proposal of the invention, the control logic determines an operational state. In this case, the control logic switches from the first operating mode to the second operating mode and/or vice versa in dependence on the determined operational mode.

Here, there are a lot of options for the type of the determined operational mode.

For one exemplary embodiment, the first operational mode is a "normal operational mode". In this case, the determined operational state might be the need for a generation of a yaw moment. The need for the generation of a yaw moment might e.g. be indicated by a driving stability system which asks for a correcting yaw moment for stabilizing the vehicle. It might also be possible that the need for a generation of a yaw moment might be indicated by a steering action for assisting the steering. For this proposal, when detecting a need for a generation of a yaw moment, the operational mode is switched from the first operational mode to the second operational mode. In the second operational mode, it is possible to generate differing friction forces at the different wheel ends for generating the yaw moment.

For another proposal, the determined operational state is the detection of differing friction conditions at the right wheel and at the left wheel. For example, one of the wheels might run on ice or a wet road leading to a small coefficient of friction, whereas the wheel on the other side runs on a perfect road with a high coefficient of friction. It is also possible that the differing friction conditions occur because the wheels on the different sides are pressed against the road by different normal forces which might be the case because of driving through a curve or because of an lateral offset of the load on the chassis. In these cases in the first operational mode the brake pressure and so the friction forces are the same on both sides. The required slip control leads to the result that the smaller of the applicable friction force is generated so that no benefit is taken from the possible higher friction level at the other wheel. Accordingly, for this embodiment the operational mode is switched from the first operational mode to the second operational mode when differing friction conditions at the different wheel sides are detected.

For another variant of the invention, the first operational mode is the normal operational mode. In this normal operational mode at the beginning of a brake application the wheel brake actuators are pressurized by the same brake pressures due to their connection via the open valve device. This can be achieved by the pressurization by only one of the pivoting anchor valves whereas the other pivoting anchor valve is closed. However, it is also possible that the brake actuators are pressurized by both pivoting anchor valves being controlled into their open positions. For this embodiment of the invention within a process of an application of the brake actuators the operational mode of the valve device is switched from the first operational mode to the second operational mode. Accordingly, for this embodiment the process of the application of the brake actuators at the wheel ends is split to a first process part in the first operational mode with opened valve device and a second process part wherein the valve device is in the second operational mode. In these two process parts, differing control schemes and/or differing control paths and/or pressurization paths can be used.

For a first embodiment, the operational mode is switched from the first operational mode to the second operational mode after a given time span of the pressurization of the brake actuators by at least one of the pivoting anchor valves has elapsed. Accordingly, within the given time span and in the first process part there is a kind of "in-shot" into the brake chambers of the two wheel brake actuators. This "in-shot" can be used for reaching the so called kissing point meaning that the brake pads have closed the gap between the brake pad surfaces and the brake discs and/or contact the brake discs with a minimum contact force. However, the given time span might also correlate to a threshold brake pressure for achieving a threshold friction force at the wheel ends. It is also possible that the time span is calculated dependent on operating positions (as e.g. dependent on the load of the vehicle or on the load of the axle; dependent on the coefficient of friction between the wheel and the road) or taken from a characteristic map.

For another embodiment, the operational mode is switched from the first operational mode to the second operational mode when a pressure criterion of the brake pressures in the brake actuators has been reached. To mention only some examples, the pressure criterion might be a threshold of the brake pressure correlating with the kissing point or a predetermined friction level.

It is also possible that the switching from the first operational mode to the second operational mode takes place when a friction force value at at least one of the wheel brake actuators has been reached.

For a specific embodiment, the given time span, the pressure criterion and/or the friction force value as described above are chosen such that before the elapse of the time span or before reaching the pressure criterion or before reaching a friction force value there is no closed loop control of the friction force but an un-modulated brake application with a continuous increase of the brake pressure. This might apply for a "normal" brake application assuming a minimum friction level of the wheels with the road.

Another possible criterion for switching the first operational mode to the second operational mode is the initiation of a slip control, so the indication of a slip at at least one of the wheels (e.g. on the basis of a wheel speed sensor) or the initiation of a modulating action of the control of the pivoting anchor valves.

However, it is also possible that the second operational mode is the normal operational mode. In this case, the determined operational state might be the detection of differing friction conditions at the right wheel and at the left wheel. For this embodiment, the operational mode is switched from the second operational mode to the first operational mode when the determined operational state is the detection of differing friction conditions at the right wheel and at the left wheel.

For another embodiment, the determined operational state is a defect or failure of a control of the right pneumatic brake branch or of the left pneumatic brake branch. Such a failure might e.g. base upon a faulty control signal from a control unit in the pneumatic brake branch, pressure losses in the pneumatic brake branch, a missing supply pressure in a pneumatic brake branch, a clogged aeration in the pneumatic brake branch or a defect in the pivoting anchor valve. When detecting a defect or a failure in one of the pneumatic brake branches, the operational mode is switched from the second operational mode to the first operational mode so that it is possible to control the same brake pressure for the two wheel ends by the remaining pneumatic brake branch which does not have the failure.

The provision of the first operating mode with the bypass connection opened by the valve device might also be used for alternately controlling the brake applications of the two brake actuators by the right pivoting anchor valve and the left pivoting anchor valve. Accordingly, for a first brake application the brake pressure is controlled by the right pivoting anchor valve whereas for a subsequent brake application the brake pressure is controlled by the left pivoting anchor valve and vice versa. It is e.g. possible that by alternately controlling the brake pressure via the two different control paths, namely the right pivoting anchor valve and the left pivoting anchor valve subsequent characteristics of the performance of the brake applications can be compared to each other so that on the basis of the alternating control it is possible to detect a failure in one of the control branches.

For another proposal of the invention, a brake application process is (normally or in a failsafe mode) performed in the first operating mode. The brake application process is split into a first process part and a second process part. At a first request for braking, in the first process part both pivoting anchor valves are controlled into the aerating position. This might be the case on the basis of an open-loop control or also in a closed-loop control. This leads to a fast pressurization of the brake chambers of the brake actuators. Also in the case that the bypass or connecting line between the two brake actuators is quite long, the pressurization by the two pivoting anchor valves leads to the consequence that both brake actuators have (approximately) the same pressure increases. The switch from the first process part to the second process part takes place when one of the following criteria is fulfilled:
- a given time span of the pressurization of the brake actuators by the pivoting anchor valves has elapsed,
- a pressure criterion (as a pressure threshold) of the brake pressures in the brake actuators is fulfilled,
- a friction force value at at least one of the wheel brake actuators is reached or
- a slip control is initiated or a slip at one wheel is detected.

When changing to the second process part one of the pivoting anchor valves is controlled into the closed position, whereas the other pivoting anchor valve controls the brake pressure for both brake actuators. In this way, it is possible to avoid an unintended interference of the action of the two pivoting anchor valves.

Furthermore, the invention suggests that in the first operating mode the control logic coordinates the control of the pivoting anchor valves. In particular, this coordination involves that an interference of the pivoting anchor valves such that one of the pivoting anchor valves de-aerates the brake lines whereas the other pivoting anchor valve aerates the brake lines is avoided. It is also possible that by the coordination the control is switched from one pivoting anchor valve to the other pivoting anchor valve and vice versa. Furthermore, it is possible that the coordination by the control logic uses one single pivoting anchor valve in the case that only small volumetric flows are required for aerating or de-aerating the brake lines, whereas the control logic uses both pivoting anchor valves in the case that higher volumetric flows are required for aerating or de-aerating the brake lines.

Generally, the brake system of the vehicle might have any known design. Preferably, the brake system is modular wherein at each wheel end there is a wheel brake unit that comprises the brake actuator and related electronics, sensors and/or valves. The inventive pneumatic vehicle axle brake assembly might also be a constructional unit, a modular unit or might be formed by separate components that might also be arranged remote from each other. For one proposal of the invention, parts of the vehicle axle brake assembly, in particular at least one of the pivoting anchor valves, are/is integrated into a wheel brake unit. Within the frame of the invention a wheel brake unit might be arranged adjacent the wheel or at the wheel end.

Furthermore, the invention suggests that the valve device or a valve of the same is also integrated into the wheel brake unit. It is also possible that the valve device comprises two valves. In this case, one of the valves is integrated into the left wheel brake unit, whereas the other valve is integrated into the right wheel brake unit. For a particular embodiment, the right pivoting anchor valve is integrated into a right wheel brake unit. The left pivoting anchor valve is integrated into a left wheel brake unit. A first valve of the valve device is integrated into the right wheel brake unit and a second valve of the valve device is integrated into the left wheel brake unit. In this case, the right pneumatic brake branch is connected to the left pneumatic brake branch by a first connecting line and a second connecting line. The first valve is arranged in the first connecting line, whereas the second valve is arranged in the second connecting line. Preferably, the first valve is controlled by a first control unit which is also integrated into the right wheel brake unit, whereas the second valve is controlled by a second control unit being integrated into the left wheel brake unit. In this case, in particular for a failure of one of the control units it is possible to control the brake application by the other control unit and the related wheel brake unit by switching the associated valve into the open position for interconnecting the two pneumatic brake branches.

As explained above, the valves of the valve device might have any design and number of switching positions. For a particular proposal of the invention, the valve device comprises (additional to the open state and the closed state) a switching state wherein the valve device connects a supply port of the valve device (which is connected to a source of pressurized air or a supply reservoir) to the pneumatic brake branches. For this embodiment, when controlling the valve device into the switching state the brake lines are connected to the supply port. Accordingly, in the switching state the brake lines and so the brake actuators are biased with the supply pressure so that the brake actuators are applied. This might be used for an emergency brake action triggered by a switching of the valve device into the switching state.

However, it is also possible that in the switching state the valve device connects a brake control port of the valve device to the pneumatic brake branches. The brake control port is connected to another brake line with a pneumatic brake pressure. Accordingly, by switching the valve device into the switching state it is possible that the brake line with a redundant brake pressure "takes over".

### DEFINITION OF A "PIVOTING ANCHOR VALVE"

A "pivoting anchor valve" in the sense of the present invention is a valve which fulfills one of the following conditions, a plurality or any number of the following conditions or all of the following conditions:
- The pivoting anchor valve comprises a pivoting anchor which forms the valve body or is coupled to the valve body, the valve body moving relatively to a valve seat between a closed position and at least one open position. The pivoting anchor can be pivoted by an electro-magnetic actuation into different pivoting positions which correlate with different valve positions (at least two valve positions). Alternatively or cumulatively, it is possible that by the electro-magnetic actuation the pivoting anchor and/or the valve body can be held in at least one of the different valve positions. It is possible that the pivoting anchor is biased with a bending moment due to the electro-magnetic actuation. The pivoting anchor or a holding device of the same comprises a flexible element or flexible section being flexible with respect to a bending by the bending moment applied by the electromagnet. A changed pivoting position or operating position of the pivoting anchor valve correlates with a changed bending of the pivoting anchor or the holding device achieved by the electro-magnetic actuation. With respect to possible exemplary embodiments of a pivoting anchor valve of this type comprising a flexible bending element reference is e.g. made to the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2. The disclosure of these patent publications and patent applications are considered as prior art of the present patent application, in particular with respect to
   - design options for a pivoting anchor valve and/or
   - the provision of a different number of stable and/or unstable valve positions and/or
   - the design of the flexible element being bent by the bending moment and/or
   - the integration of the flexible element into the pivoting anchor or its linkage thereto and/or
   - the use and arrangement of permanent magnets for providing stable valve positions and/or
   - the design of at least one electromagnet applying the bending moment for pivoting the pivoting anchor and/or
   - the control of the pivoting anchor valve.
   However, it is also possible that the pivoting anchor valve comprises a pivoting anchor which is supported for being pivoted by a bearing. The pivoting anchor can be pivoted by electromagnets into different operating positions or held in the same. The different operating positions correlate with different valve positions of the pivoting anchor valve. With respect to embodiments of this type, exemplary reference is made to the publications WO 2016/062542 A1 and EP 3 222 897 A1. The disclosure of these publications is considered as prior art of the present patent application, in particular with respect to the design of the pivoting anchor valve, the provided valve positions and/or the control and the electro-magnetic actuation of the pivoting anchor valve.
- An inventive pivoting anchor valve might also be denoted as "fast acting brake valve" (abbreviated "FABV"). An FABV allows a fast actuation with a fast change of the operating position wherein a change of the operating position might e.g. be achieved within a time span of less than 25 ms, less than 20 ms, less than 10 ms, less than 7 ms, less than 5 ms, less than 3 ms, less than 2 ms or even less than 1 ms.
- By use of an inventive pivoting anchor valve in an open position a large flow rate and/or a large valve cross-section or transitional cross-section can be provided.
   Preferably, the transitional cross-section of the pivoting anchor valve in an open position at least equals the inner cross-section of the supply tube connected to the supply port of the pivoting anchor valve. Accordingly, if the supply tube has an inner cross-section with a diameter of 5 mm, the transitional cross-section of the pivoting anchor valve in the open position is at least 0.2 cm².
   Preferably, in an open position the transitional cross-section or valve cross-section is at least 0,3 cm², at least 0,4 cm², at least 0,5 cm², at least 0,6 cm² or even at least 0,8 cm².
- Due to the pivoting of the pivot anchor the valve body closing the valve seat is pivoted between the closed position and the open position. Accordingly, the transitional cross-section in the open position corresponds to the outer circumference of a cylinder cut in two non-parallel planes wherein these planes form an angle that corresponds to the pivot angle of the pivot anchor between the open position and the closed position. In particular the pivot angle and the angle between these planes is in the range of 1° to 5° or 2° to 4°.
- The (averaged) movement of the valve body formed by the pivoting anchor or connected thereto between one valve position and the adjacent valve position is in the range of 0.5 to 5 mm, in particular 1.0 to 4 mm.
- When controlling a pivoting anchor valve of this type, there might be only a short delay due to the inertial mass of the moved valve elements, in particular a delay or dead time being smaller than 4 ms, smaller than 2 ms or even less than 1 ms.
- It is possible that the pivoting anchor valve comprises more than one stable operating position. The pivoting anchor valve might e.g. be bi-stable or multi-stable. This might e.g. be provided in the way that in two or more operating positions the pivoting anchor or a component connected therewith contacts a permanent magnet (cp. the patent publications EP 2 756 215 B1, EP 2 049 373 B1, EP 2 567 131 B1 and EP 1 303 719 B1 and the patent applications with the application numbers GB 1 719 309.5, GB 1 904 957.6, GB 1 820 137.6, GB 1 806 527.6, GB 1 719 415.0 and GB 1 719 344.2). However, it is also possible that bi-stable operating positions are provided by a mechanical spring element which e.g. biases the pivoting anchor or a valve element connected therewith from an unstable middle equilibrium position in both directions towards stable operating positions as disclosed in the publications WO 2016/062542 A1 or EP 3 222 897 A1. Furthermore, it is possible that a stable position is provided by the bending stiffness of the flexible element or pivoting anchor.
- The pivoting anchor valve might be an electrically controlled pneumatic valve without pneumatic pilot having a single stable state, two or more stable states when not being electrically energized.
- For the pivoting anchor valve the pneumatic control bandwidth is primarily determined by the mechatronic design and actuator size or control volume

Within the frame of the invention, the pivoting anchor valve might be embodied as a 2/2-way valve, 3/2-way valve, 3/3-way valve or any other valve. It is also possible that a plurality of redundant pivoting anchor valves are arranged in one constructional unit and/or a combination of a plurality of pivoting anchor valves that are arranged in pneumatical parallel connection or in series connection are arranged in a constructional unit (e.g. a combination of a 3/2-way valve and a 2/2-way valve; e.g. a connection of a pressurized inlet line to the outlet for the service brake cylinder via a first 2/2-way valve as well as a connection of a de-aerating port to the outlet for the service brake cylinder via a second 2/2-way valve). It is possible that a pivoting anchor valve which is pivoted into different operating positions due to the bending of the pivoting anchor or an associated holding element is partially transferred from one operating position of the pivoting anchor valve into another operating position of the pivoting anchor valve by energy which is stored by the bending of the pivoting anchor or the associated holding element. In this way, then for achieving the desired operating positions by means of at least one electromagnet only the required additional energy for arriving at the other operating position has to be provided.

### GENERAL

Advantageous developments of the invention result from the claims, the description and the drawings. The advantages of features and of combinations of a plurality of features mentioned at the beginning of the description only serve as examples.

The number of the features mentioned in the claims and in the description is to be understood to cover this exact number and a greater number than the mentioned number without having to explicitly use the adverb "at least". For example, if an element is mentioned, this is to be understood such that there is exactly one element or there are two elements or more elements. Additional features may be added to these features, or these features may be the only features of the respective product.

The reference signs contained in the claims are not limiting the extent of the matter protected by the claims. Their sole function is to make the claims easier to understand.

### BRIEF DESCRIPTION OF THE DRAWINGS

In the following, the invention is further explained and described with respect to preferred exemplary embodiments illustrated in the drawings.
- **Figs. 1 and 2**: schematically show a pneumatic vehicle axle brake assembly comprising a left and a right pneumatic brake branch connected to each other by a valve device.
- **Figs. 3 and 4**: schematically show a method for operating a pneumatic vehicle axle brake assembly executed by control logic of a control unit.
- **Fig. 5**: schematically shows a brake system of a commercial vehicle or trailer comprising a pneumatic vehicle axle brake assembly.
- **Fig. 6**: schematically shows a pneumatic vehicle axle brake assembly comprising a left and a right pneumatic brake branch connected to each other by a valve device.

### DESCRIPTION OF THE DRAWINGS

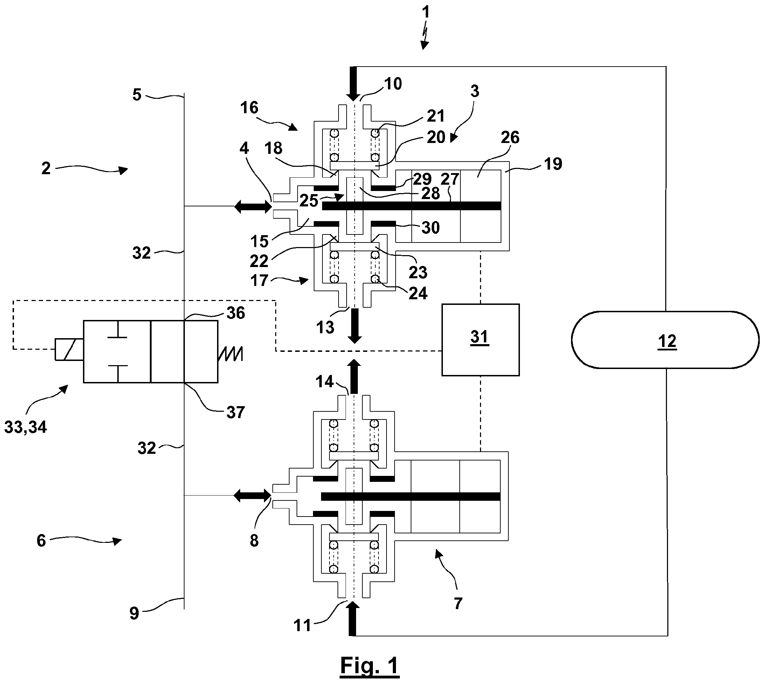

**Fig. 1** schematically shows a pneumatic vehicle axle brake assembly 1. The vehicle axle brake assembly 1 is associated with any axle of a commercial vehicle (in particular a tractor or a trailer) and responsible for controlling the brake pressure in the brake actuators at a right wheel and a left wheel of the axle.

The vehicle axle brake assembly 1 comprises a right pneumatic brake branch 2. The right pneumatic brake branch 2 comprises a right pivoting anchor valve 3 having a right brake port 4 which is connected via a right brake line 5 to a right pneumatic brake actuator (not shown in Fig. 1). Dependent on the electronic control of the right pivoting anchor valve 3 by a control device 31 and the operating position of the right pivoting anchor valve 3 it is possible
- to aerate the right brake line 5 and so the right brake actuator,
- to de-aerate the right brake line 5 and so the right brake actuator and
- to hold the brake pressure in the right brake line 5 and the right brake actuator.

The vehicle axle brake assembly 1 further comprises a left pneumatic brake branch 6. The left pneumatic brake branch 6 comprises a left pivoting anchor valve 7 having a left brake port 8 which is connected via a left brake line 9 to a left pneumatic brake actuator (not shown in Fig. 1). Dependent on the electronic control of the right pivoting anchor valve 7 by the control device 31 and the operating position of the right pivoting anchor valve 7 it is possible
- to aerate the left brake line 9 and so the left brake actuator,
- to de-aerate the left brake line 9 and so the left brake actuator and
- to hold the brake pressure in the left brake line 9 and the left brake actuator.

Accordingly, the pivoting anchor valves 3, 7 have three different switching positions or valve positions. Preferably, all of the three valve positions are stable valve positions that can be upheld without an electronic control action by the control device 33 but can be changed due to the control by the control device 33.

Additional to the brake ports 4, 8 the pivoting anchor valves 3, 7 also comprise an associated supply port 10, 11 which is connected to a supply reservoir 12. Furthermore, the pivoting anchor valves 3, 7 each comprise a de-aerating port 13, 14.

For the shown embodiment, the pivoting anchor valves 3, 7 have the same designs which in the following is explained on the basis of the pivoting anchor valve 3:
The pivoting anchor valve 3 comprises a valve chamber 15 which is permanently connected to the brake port 4. The valve chamber 15 is connected by an inlet valve 16 to the supply port 10 and by an outlet valve 17 to the de-aerating port 13.

The inlet valve 16 comprises an inlet valve seat 18 formed by a housing 19 of the pivoting anchor valve 3. An inlet valve body 20 is pressed by an inlet valve spring 21 against the inlet valve seat 18 for closing the connection between the valve chamber 15 and the supply port 10. The inlet valve body 20 is additionally pressed by the supply pressure against the inlet valve seat 18, whereas the pressure in the valve chamber 15 biases the inlet valve body 20 away from the inlet valve seat 18. The inlet valve spring 21 is dimensioned and pre-tensioned such that also for a zero supply pressure any existing pressure in the valve chamber 15 is not able to open the inlet valve 16.

The outlet valve 17 comprises an outlet valve seat 22 formed by the housing 19 of the pivoting anchor valve 3. An outlet valve body 23 is pressed by an outlet valve spring 24 against the outlet valve seat 22 for closing the connection between the valve chamber 15 and the de-aerating port 13. The pressure in the valve chamber 15 biases the outlet valve body 23 away from the outlet valve seat 22. The outlet valve spring 24 is dimensioned and pre-tensioned such that any existing pressure in the valve chamber 15 is not able to open the outlet valve 17.

The pivoting anchor valve 3 comprises an actuation element 25. By the control of at least one electromagnet 26 by the control device 31 it is possible to pivot the actuation element 25 in one direction towards the inlet valve body 20 and to apply an opening force upon the inlet valve body 20 so that the inlet valve 16 can be opened. Furthermore, by an opposite control it is possible to pivot the actuation element 25 into the opposite direction towards the outlet valve body 23 and to apply an opening force upon the outlet valve body 23 for opening the outlet valve 17. Accordingly, the pivoting anchor valve 3 comprises three operating positions, namely
- the closed position as shown in Fig. 1 without an energization of the electromagnet 26 wherein both the inlet valve 16 and the outlet valve 17 are closed,
- an aerating position wherein the outlet valve 17 is closed and the actuation element 25 is pressed against the inlet valve body 20, the inlet valve 16 is opened and the supply reservoir is fluidically connected to the brake port 4 and
- a de-aerating position wherein the inlet valve 16 is closed and the actuation element 25 is pressed against the outlet valve body 23, the outlet valve 17 is opened and the brake port 4 is fluidically connected to the de-aerating port 13.

For the shown embodiment, the actuation element 25 has a specific design (without this necessarily being the case):
The actuation element 25 comprises a flexible anchor 27. The electromagnet 26 applies a bending moment upon the flexible anchor 27 when energized by the control device 31. Due to the bending moment, the flexible anchor 27 is deflected with a bending curve. The flexible anchor 27 carries an actuation plunger 28 having an orientation transverse to the longitudinal axis of the flexible anchor 27. Opposing front faces of the actuation plunger 28 contact in the respective valve positions the inlet valve body 20 respectively the outlet valve body 23.

It is possible that for holding the pivoting anchor valve 3 in the aerating position or the de-aerating position it is required to permanently energize the electromagnet 26. However, as shown for the preferred embodiment of the pivoting anchor valve 3 in Fig. 1, the pivoting anchor valve 3 might comprise a permanent inlet magnet 29 and a permanent outlet magnet 30. In the aerating position the flexible anchor 27 contacts the permanent inlet magnet 29. By the magnetic force applied by the permanent inlet magnet 29 upon the flexible anchor 27 the flexible anchor 27 can be held in position also when at least reducing the energization of the electromagnet 26. In the same way, the flexible anchor 27 contacts the permanent outlet magnet 30 in the de-aerating position of the pivoting anchor valve.

It is possible that without an energization of the electromagnet 26 the pivoting anchor valve 3 comprises three stable operating positions wherein in the closed position of the pivoting anchor valve 3 correlating with the centered position of the flexible anchor 27 in Fig. 1 the stable operating position is upheld by the bending stiffness of the flexible anchor 27 and in the other operating positions the stable operating positions are upheld by the permanent inlet magnet 29, respectively the permanent outlet magnet 30.

For leaving the stable aerating position or de-aerating position, the electromagnet 26 can be energized with a control signal created or controlled by the control device 31. If due to the energization the flexible anchor 27 has established a gap to the permanent magnet 29, 30, the magnetic force of the permanent magnet 29, 30 reduces. Also when reducing or removing the energization of the electromagnet 26, the flexible anchor 27 will then be moved further away from the former stable position due to the bending stiffness of the flexible anchor 27. With a decay of the resulting oscillations of the actuation plunger 28 (that might also be additionally dampened or dampened by a dampening control of the electromagnet 26) the actuation plunger 28 returns into the stable centered position correlating with the closed pivoting anchor valve 3. However, without any additional damping the resulting oscillation and the bending stiffness of the flexible anchor 27 lead to the result that the flexible anchor 27 oscillates through the centered position towards the other stable operating position. Accordingly, for changing the valve position from the aerating position to the de-aerating position (and vice versa) the minimum energy that has to be provided by the electromagnet 26 is the energy required for overcoming the existing damping. Furthermore, the energy provided by the electromagnet 26 has to guarantee that also the pneumatic forces applied upon the valve bodies 20, 23 can be overcome for opening the related valve 16, 17.

The pneumatic brake branches 2, 6 are connected to each other by a connecting line 32. In the connecting line 32 a valve device 33 is arranged. For the embodiment shown in Fig. 1, the valve device 33 is a 2/2-solenoid valve 34. The 2/2-solenoid valve 34 is controlled by the control device 31. The 2/2-solenoid valve 34 comprises an open position and a closed position.

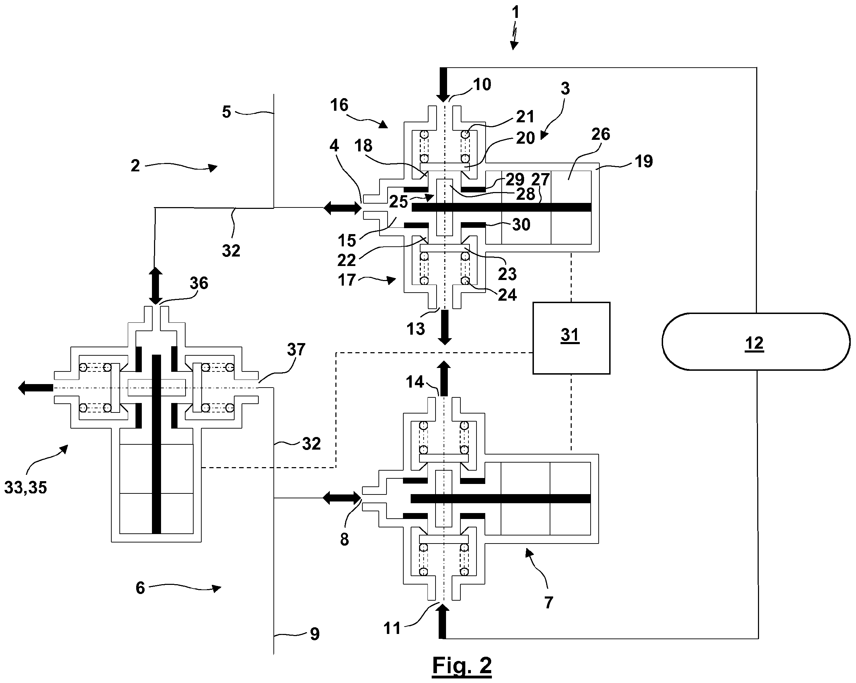

The embodiment of **Fig. 2** generally corresponds to the embodiment of Fig. 1. However, here the valve device 33 arranged in the connecting line 32 is a pivoting anchor valve 35. The pivoting anchor valve 35 generally has the same design as the pivoting anchor valves 3, 7. However, here the port being the brake port 4 for the pivoting anchor valve 3 is a right connecting port 36 connected via the connecting line 32 to the right brake line 5 and the right brake actuator. The port being the right supply port 10 of the pivoting anchor valve 3 here is a left connecting port 37 connected via the connecting line 32 to the left brake line 9 and the left brake actuator. The centered operating position of the pivoting anchor valve 35 of Fig. 2 corresponds to the closed position of the 2/2-solenoid valve 34 in Fig. 1 so that in this closed position of the pivoting anchor valve 35 the connection of the pneumatic brake branches 2, 6 is closed. Instead, the aerating position of the pivoting anchor valve 3 corresponds to an open position of the pivoting anchor valve 35 and to the open position of the 2/2-solenoid valve 34 in Fig. 1. In this open operating position, the pivoting anchor valve 35 connects the pneumatic brake branches 2, 6 with each other. Furthermore, the pivoting anchor valve 35 comprises a de-aerating position. In the de-aerating position, it is possible to de-aerate the right brake actuator and the right brake line 5 via the pivoting anchor valve 35, whereas the left brake actuator and the left brake line 9 are closed against the right pneumatic brake branch 2 (whereas the pressurization of the right pneumatic brake branch 2 can still be controlled by the pivoting anchor valve 7).

The control device 31 might be a single control unit or might comprise a plurality of control units that also might be linked to each other by connecting lines or a data bus system.

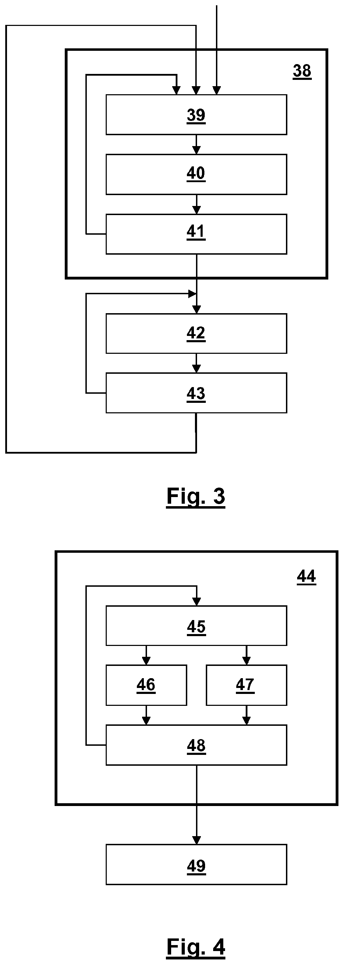

The control device 31 comprises control logic for controlling the pivoting anchor valves 3, 7 as well as the valve device 33 for executing the following functions:
For a method for operating a pneumatic vehicle axle brake assembly 1 as schematically shown in **Fig. 3****,** the vehicle axle brake assembly 1 in a method step 38 is operated in a normal operational mode. In this normal operational mode, the valve device 33 is controlled into the open position for connecting the pneumatic brake branches 2, 6. In this normal operational mode, the brake lines 5, 9 and the right brake actuator and the left brake actuator are biased by the same brake pressures for generating the same brake forces at the right wheel and the left wheel of the axle. Within the normal operational mode in a method step 39 it is possible to aerate the brake lines 5, 9 and the associated brake actuators for increasing the brake friction or in a method step 40 it is possible to de-aerate the pressure in the brake lines 5, 9 with the associated brake actuators for reducing the brake force. It is also possible that there is a slip control with an intermittent switching between a de-aeration, a blocking and an aeration of the brake lines 5, 9 for a modulated brake action.

For at least temporarily keeping the brake pressure constant, the control device 31 controls the pivoting anchor valves 3, 7 into the closed positions.

For at least temporarily aerating the brake lines 5, 9 the control device choses one of the following options:
a) It is possible that the pivoting anchor valve 3 is kept in the closed position, whereas the pivoting anchor valve 7 is controlled into the aerating position.
b) It is also possible that the pivoting anchor valve 3 is controlled into the aerating position, whereas the pivoting anchor valve 7 is controlled into the closed position.
c) Finally, it is possible that both the pivoting anchor valve 3 as well as the pivoting anchor valve 7 are controlled into the aerating position which is in particular the case if an aeration with an increased flow of pressurized air, so a steep increase of the brake pressure in the brake actuators, is of interest.

The control device 31 comprises control logic which guarantees that it is avoided that one of the pivoting anchor valves 3, 7 is in aerating position, whereas the other one of the pivoting anchor valves 3, 7 is in the de-aerating position for avoiding that the pivoting anchor valves 3, 7 have counteracting effects leading to pressure losses and a decrease of the velocity of the aeration and/or de-aeration.

In a method step 41, the control device 31 determines an operational state. For the determination of the operational state the control device 31 e. g. considers available sensor signals, signals from other control units, inputs of the driver, inputs from an autonomous driving system, environmental parameters and the like. In the method step 41, the operational state is determined for deciding
- if the normal operational mode can be upheld as a first operational mode wherein the valve device 33 is in the open position or
- if it is required to switch to a second operational mode wherein the valve device 33 is controlled into the closed position.

For a first embodiment of the invention, the determined operational state is the determination if there is a (actual or estimated) need for a yaw moment. Such a yaw moment can for example be requested by a driving stability system that indicates that the vehicle tends to enter into an unstable driving mode requiring a correcting yaw moment. Another example for an indicated or actual need for a generation of a yaw moment might be the detection of a need for a steering action achieved by an applied yaw moment. In the case that in the method step 41 it is detected that there is a need for a yaw moment the yaw moment can be achieved by generating differing brake forces at the right wheel and at the left wheel. In this case in the method step 42 the second operational mode is entered and the valve device 33 is switched into the closed position. In the closed position of the valve device 33 it is possible to control a brake pressure via the pivoting anchor valve 3 in the brake line 5 and the right brake actuator that is different from the brake pressure controlled by the pivoting anchor valve 7 in the brake line 9 and the left brake actuator.

In a method step 43, again the operational state is determined. If there is still the need for a generation of a yaw moment, the second operational mode is upheld and the generation of a yaw moment is continued by producing differing brake pressures at the different wheel sides. Otherwise, the method returns back to the method step 38 and into the first operational mode (i.e. the normal operational mode).

For an alternative or cumulative embodiment in the method steps 41, 43 the determined operational state is the detection of differing friction conditions at the right wheel and at the left wheel. If the coefficients of friction differ on the different wheel sides (one wheel on wet ground or ice; the other wheel on dry ground), the open position of the valve device 33 in the first operational mode and the requirement to avoid slippage at both wheels lead to the consequence that the brake pressure applied to both brake actuators considers the lower one of the two coefficients of friction so that it is not possible to use the maximum of the possible friction force. Accordingly, when detecting in the method steps 41, 43 that there are different friction conditions at the right wheel and at the left wheel the valve device 33 can be switched into the closed position so that the brake pressures at the brake lines 5, 9 and at the associated brake actuators can be controlled individually so that on both wheel sides the optimum of the friction force can be achieved.

As an alternative or cumulative determined operational state leading to different friction conditions at the right wheel and at the left wheel also differing wheel loads on the left wheel and on the right wheel (due to driving through a curve or due to an offset of the load arranged on the vehicle platform) can be used. Accordingly, when detecting a higher normal load at one wheel end than at the other wheel end it is possible to switch the valve device 33 into the closed position and to individually control the brake pressures in the brake lines 5, 9 under consideration of the differing normal loads with the result of optimal and differing brake forces at the right wheel and at the left wheel.

**Fig. 4** shows another method for operating the pneumatic vehicle axle brake assembly 1 under the control by the control logic of the control device 31. Here, in a method step 44 the pneumatic vehicle axle brake assembly 1 is in a second operating mode which here forms the "normal operating mode". The valve device 33 is controlled in a method step 45 into the closed position so that the pneumatic brake branches 2, 6 are separated. This allows an independent control of the brake pressures in the brake lines 5, 9 and the brake actuators in method steps 46, 47 which includes a de-aerating, an aerating or a blocking as well as a modulated brake action.

In a method step 48, an operational state is determined. On the basis of the determined operational state it is decided if the second operational mode is upheld with an independent control of the two pneumatic brake branches 2, 6. Otherwise, the method continues with method step 49, wherein the operational mode is switched to the first operational mode 49 by switching the valve device 33 from the closed position into the open position.

The operational state considered for this decision is in particular the detection of a failure of a control of the right pneumatic brake branch 2 or of the left pneumatic brake branch 6. This might e. g. be a defect in the control device 31 for one of the pivoting anchor valves 3, 7, a failure as a pressure leakage in one of the supply lines to the supply ports 10, 11, a failure of one of the sensors associated with the control of one of the pneumatic brake branches 2, 6 (as e.g. a wheel speed sensor or a brake pressure sensor) or a failure of the pivoting anchor valve 3, 7 itself. In this case, by a switch to the first operational mode in method step 49 it is possible to use the remaining control path not having the failure for controlling the brake pressure for both brake lines 5, 9 and so for the right brake actuator and the left brake actuator. Accordingly, if e.g. the supply line to the supply port 11, the control for the pivoting anchor valve 7 or the pivoting anchor valve 7 itself has the failure, the control branch via the pivoting anchor valve 7 is deactivated, the valve device 33 is switched into the open position and both brake lines 5, 9 are controlled by the pivoting anchor valve 3 (whereas the pivoting anchor valve 7 takes the closed position so that there is no interference of the pivoting anchor valve 7 with the control actions of the pivoting anchor valve 3).

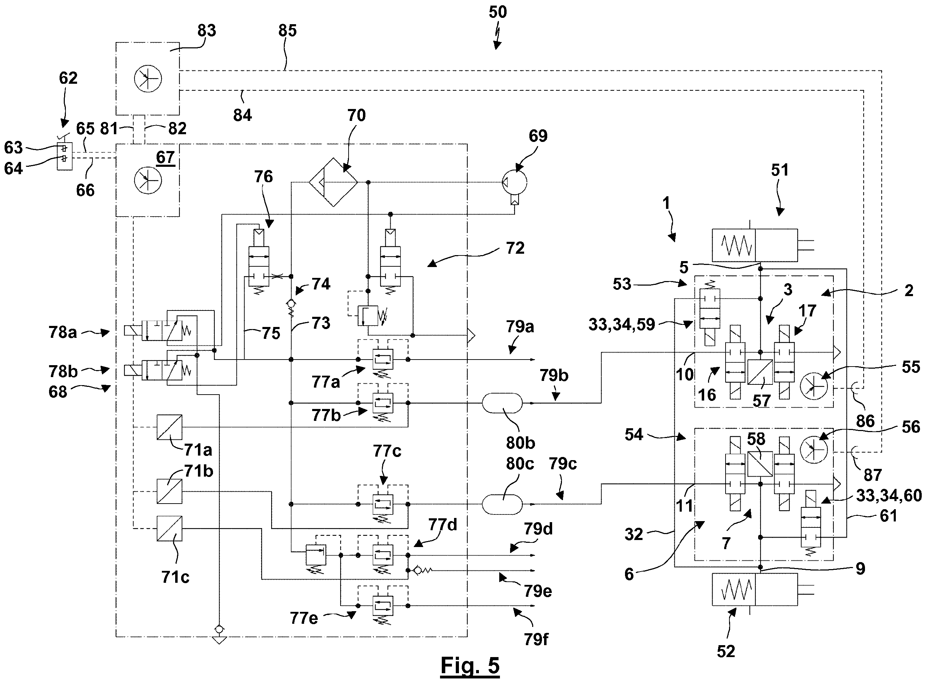

**Fig. 5** shows a (part of a) brake system 50 comprising the pneumatic vehicle axle brake assembly 1, a right brake actuator 51 and a left brake actuator 52 (here embodied as combination brake cylinder comprising a spring brake part and a service brake part). The brake actuators 51, 52 are connected to the associated brake lines 5, 9. In Fig. 5 the pivoting anchor valves 3, 7 are shown in a schematic representation with the inlet valve 16 and the outlet valve 17 being represented by 2/2-solenoid valves. The pivoting anchor valve 3 (respectively the pivoting anchor valve 7) is integrated into a right wheel brake unit 53 (respectively a left wheel brake unit 54). The wheel brake units 53, 54 are here schematically represented by the boxes drawn with dotted and dashed lines.

For the shown embodiment, also a control unit 55 (respectively 56) and a pressure sensor 57 (respectively 58) is integrated into the right wheel brake unit 53 (respectively the left wheel brake unit 54). The pressure sensors 57, 58 measure the brake pressure in the brake lines 5, 9.

For the embodiment shown in **Fig. 5****,** the valve device 33 comprises a valve 59 integrated into the connecting line 32 which connects the right pneumatic brake branch 2 to the left pneumatic brake branch 6. The valve 59 is also integrated into the right wheel brake unit 53. On the basis of this valve 59 and the connecting line 32 the functionality described on the basis of Figs. 1 to 4 can be provided.

Optionally, the valve device 33 might comprise an additional valve 60 which is integrated into an additional connecting line 61 which also connects the pneumatic brake branches 2, 6. The valve 60 is integrated into the left wheel brake unit 54.

The valves 59, 60 are here embodied by 2/2-solenoid valves 34. The connecting lines 32, 61 can be connected at any point to the brake lines 5, 9, so within the wheel brake units 53, 54 or outside from the wheel brake units 53, 54. For the embodiment shown in Fig. 5 connecting line 32 branches from the brake line 5 within the right wheel brake unit 53 but branches from the left brake line 9 outside from the left wheel brake unit 54. The corresponding applies for the connecting line 61.

The brake system 50 shown in Fig. 5 comprises a foot brake pedal 62 wherein two redundant sensors 63, 64 provide redundant brake signal via redundant signal lines 65, 66 to a control unit 67.

The control unit 67 is part of an air processing unit 68 of common design. Compressed air is supplied to the air processing unit 68 via a compressor 69 which is here controlled by the air processing unit 68. The air processing unit 68 comprises an air dryer 70, pressure sensors 71a, 71b, 71c, a pressure controller 72, a central line 73 comprising a check valve 74, a bypass line 75 bypassing the check valve 74, a regeneration valve 76 integrated into the bypass line 75, circuit protection valves 77a, 77b, 77c, 77d, 77e and/or control valves 78a, 78b controlled by the control unit 67 and controlling the functions of the air processing unit 68 (here e. g. controlling the regeneration valve 76, the pressure controller 72 and the compressor 69). The air processing unit 68 serves for providing different consumer circuits 79a, 79b, 79c, 79d, 79e, 79f with pressurized air. Here, by the control of the air processing unit 68 and the circuit protection valves 77 it is provided that
- the consumer circuits 79 are supplied with pressurized air at the desired pressures and/or
- a minimum pressure is provided and/or
- it is possible that one consumer circuit 79 can be supplied with pressurized air by a transverse flow of pressurized air from another consumer circuit and/or
- the consumer circuits 79 are filled with pressurized air in a given sequence.

For the embodiments shown, the consumer circuit 79b comprises the right pivoting anchor valve 3, the right pneumatic brake branch 2 and the right wheel brake unit 53 with the right brake actuator 51. As shown in Fig. 5, in this consumer circuit 79b a supply reservoir 80b can be arranged.

The consumer circuit 79c comprises the left pivoting anchor valve 7, the left pneumatic brake branch 6 and the left wheel brake unit 54 with the left brake actuator 52. A supply reservoir 80c is integrated into the consumer circuit 79c.

The control unit 67 is connected via signal lines 81, 82 to another control unit 83. The signal lines 81, 82 transmit (possibly besides other data) redundant signals at least correlating to the signals of the sensors 63, 64, so a brake demand by the driver, from the control unit 67 to the control unit 83. Via a control line 84 (respectively control line 85) the control unit 83 is connected to a control port 86 (respectively 87) of the right wheel brake unit 53 (respectively left wheel brake unit 54) and transmits a brake demand. On the basis of this brake demand the control units 55, 56 of the wheel brake units 53, 54 control the pivoting anchor valves 3, 7 for generating the desired brake pressure.

In the case that e.g. one of the control units 67, 83, 55, 56 detects that one of the wheel brake units 53, 54 does not work properly, the control unit 55, 56 correlated to the wheel brake unit 53, 54 having the failure controls the respective pivoting anchor valve 3, 7 into the closed position or the pivoting anchor valve 3, 7 takes the closed position. The valve 59, 60 associated with the wheel brake unit 53, 54 having the failure will then be opened which leads to the desired effect that both brake actuators 51, 52 can be controlled by the control unit 55, 56 and the associated pivoting anchor valve 3, 7 of the wheel brake unit 53, 54 which does not have the failure.

In the case that there are two connecting lines 32, 61 with integrated valves 59, 60 of the valve device 33 this functionality can also be provided in the case that the failure effects or is caused by one of the control units 55, 56.

To mention only one example for the way of detecting a failure, it is possible that the control unit 55 compares the brake demand submitted to the control port 86 with the pressure signal sensed by the pressure sensor 57. In the case that the control by the control unit 55 and/or the pivoting anchor valve 3 does not work properly, the sensed pressure differs from the desired pressure signal which can be taken as an indicator that the wheel brake unit 53 has a failure. Accordingly, the wheel brake unit 53 can be "deactivated" and control of the brake actuator 51 is taken over by the wheel brake unit 54.

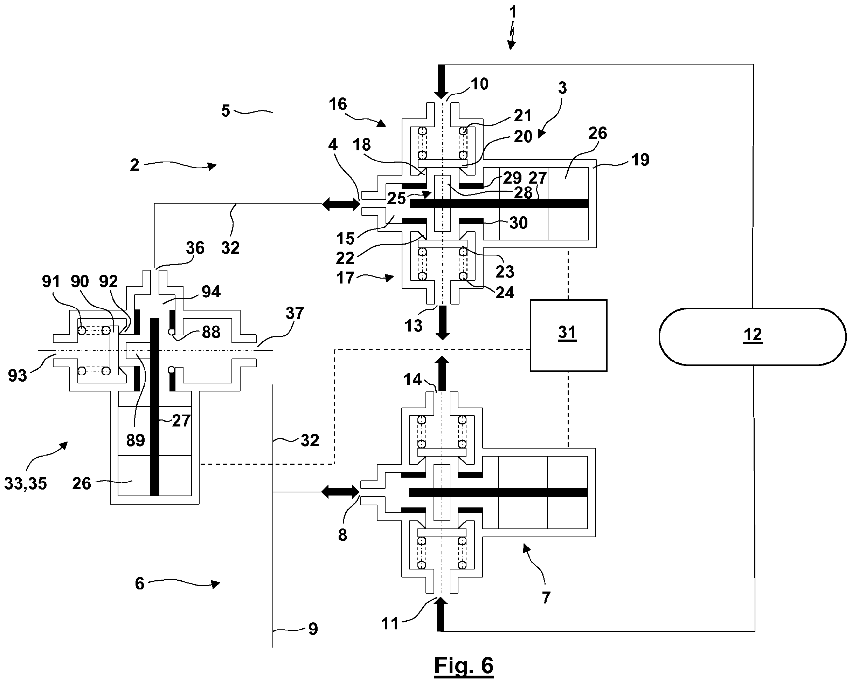

In Fig. 6 the pneumatic vehicle axle brake assembly 1 has a valve device 33 being a pivoting anchor valve 35 having a differing design: In the valve position shown in Fig. 6 (which is the centered stable switching position upheld by the bending stiffness of the flexible anchor 27) the pivoting anchor valve connects the ports 36, 37 so that the pneumatic brake branches 2, 6 are connected with each other. By an energizing of the electromagnet 26 in a first direction the pivoting anchor 27 is pivoted in clockwise direction. The pivoting anchor 27 closes a valve seat 88 formed by a sealing or O-ring so that the connection of the ports 36, 37 is closed. The two described valve positions of the pivoting anchor valve 35 generally correspond to the two positions described for the 2/2-solenoid valve 34 in Fig. 1 so that the above-described functionality can be provided. Additionally, by an energization of the electromagnet 26 in a second direction it is possible to pivot the flexible anchor 27 in counter-clockwise direction in Fig. 6. A plunger 89 of the flexible anchor 27 moves a valve body 90 against the bias by a valve spring 91 away from a valve seat 92. Accordingly, a connection between a port 93 and the valve chamber 94 is established. Due to the fact that the flexible anchor 27 has moved away from the valve seat 88 the ports 93, 36 and 37 are connected to each other.

For one embodiment, the port 93 is connected to a pressurized air source, as e.g. a supply reservoir. In the case that the pivoting anchor valve 35 is controlled into the position wherein the valve body 90 does not close the valve seat 88 the pressurized air from the pressure source or reservoir approaches ports 36, 37 so that the brake lines 5, 9 as well as the brake actuators 51, 52 are biased by the pressure of the pressurized air source or reservoir. This leads to an emergency brake action with the full application of the service brake of the brake actuators 51, 52.

For another embodiment of the invention, the port 93 is connected to a brake line providing a brake pressure. This brake pressure can be generated by a separate brake path, on the basis of an autonomous driving system, on the basis of the demand of the driver, via an electro-pneumatical control path or via a mechanical-pneumatical control path (e.g. the direct control of the brake pressure by the brake pedal linked to the valve generating the brake pressure). In this case, the control of the pivoting anchor valve 35 into the position wherein the valve body 90 does not close the valve seat 92 leads to the transfer of the brake pressure at port 93 to the brake lines 5, 9 and so to the brake actuators 51, 52 so that the wheels on both sides are braked with the brake force correlating with the brake pressure at port 93.

For the embodiments shown in Figs. 1, 2 and 6, the valve device 33 is arranged separately and remote from the wheel brake units 53, 54. However, also for these embodiments it is possible that the brake device 33 or valves of the same are integrated into at least one of the wheel brake units 53, 54 as shown in Fig. 5. For the embodiment shown in Fig. 6, for one option this means that the port 93 can be connected to the supply line of the related consumer circuit 97b, 97c within the wheel brake unit 53, 54.

### LIST OF REFERENCE NUMERALS

- 1: pneumatic vehicle axle brake assembly
- 2: right pneumatic brake branch
- 3: right pivoting anchor valve
- 4: right brake port
- 5: right brake line
- 6: left pneumatic brake branch
- 7: left pivoting anchor valve
- 8: left brake port
- 9: left brake line
- 10: right supply port
- 11: left supply port
- 12: supply reservoir
- 13: right de-aerating port
- 14: left de-aerating port
- 15: valve chamber
- 16: inlet valve
- 17: outlet valve
- 18: inlet valve seat
- 19: housing
- 20: inlet valve body
- 21: inlet valve spring
- 22: outlet valve seat
- 23: outlet valve body
- 24: outlet valve spring
- 25: actuation element
- 26: electromagnet
- 27: flexible anchor
- 28: actuation plunger
- 29: permanent inlet magnet
- 30: permanent outlet magnet
- 31: control device
- 32: connecting line
- 33: valve device
- 34: 2/2-solenoid valve
- 35: pivoting anchor valve
- 36: right connecting port
- 37: left connecting port
- 38: method step
- 39: method step
- 40: method step
- 41: method step
- 42: method step
- 43: method step
- 44: method step
- 45: method step
- 46: method step
- 47: method step
- 48: method step
- 49: method step
- 50: brake system
- 51: right brake actuator
- 52: left brake actuator
- 53: right wheel brake unit
- 54: left wheel brake unit
- 55: control unit
- 56: control unit
- 57: pressure sensor
- 58: pressure sensor
- 59: valve
- 60: valve
- 61: connecting line
- 62: foot brake pedal
- 63: sensor
- 64: sensor
- 65: signal line
- 66: signal line
- 67: control unit
- 68: air processing unit
- 69: compressor
- 70: air dryer
- 71: pressure sensor
- 72: pressure controller
- 73: central line
- 74: check valve
- 75: bypass line
- 76: regeneration valve
- 77: circuit protection valve
- 78: control valve
- 79: consumer circuit
- 80: supply reservoir
- 81: signal line
- 82: signal line
- 83: control unit
- 84: control line
- 85: control line
- 86: control port
- 87: control port
- 88: valve seat
- 89: plunger
- 90: valve body
- 91: valve spring
- 92: valve seat
- 93: port
- 94: valve chamber

## Claims

1. Pneumatic vehicle axle brake assembly (1) comprising
a) a right pneumatic brake branch (2) associated with a right side of a vehicle axle and used for controlling the brake pressure biasing a right wheel brake actuator (51), the right pneumatic brake branch (2) comprising a right pivoting anchor valve (3), and
b) a left pneumatic brake branch (6) associated with a left side of the vehicle axle and used for controlling the brake pressure biasing a left wheel brake actuator (52), the left pneumatic brake branch (6) comprising a left pivoting anchor valve (7),
c) wherein the right pneumatic brake branch (2) is connected to the left pneumatic brake branch (6) by a valve device (33) which comprises
ca) an open position providing a connection of the right pneumatic brake branch (2) to the left wheel brake actuator (52) and/or of the left pneumatic brake branch (6) to the right wheel brake actuator (51) and
cb) a closed position wherein
- the right pneumatic brake branch (2) is separated by the valve device (33) from the left wheel brake actuator (52) and/or
- the left pneumatic brake branch (6) is separated by the valve device (33) from the right wheel brake actuator (51),
d) the pivoting anchor valves (3, 7) comprising a pivoting anchor which forms the valve body or is coupled to the valve body, the valve body moving relatively to a valve seat between a closed position and at least one open position and the pivoting anchor being pivoted by an electro-magnetic actuation into different pivoting positions which correlate with different valve positions.

2. Pneumatic vehicle axle brake assembly (1) of claim 1, **characterized in that** the valve device (33) comprises a 2/2-valve.

3. Pneumatic vehicle axle brake assembly (1) of claim 1 or 2, **characterized in that** the valve device (33) comprises a pivoting anchor valve (35).

4. Pneumatic vehicle axle brake assembly (1) of one of claims 1 to 3, **comprising** a control device (31) with control logic, the control logic comprising
a) a first operating mode wherein the valve device (33) is controlled into the open position and the brake pressure biasing the left wheel brake actuator (52) and the right wheel brake actuator (51) is controlled by at least one of the pivoting anchor valves (3, 7) and
b) a second operating mode wherein the valve device (33) is controlled into the closed position and the brake pressure biasing the left wheel brake actuator (52) is controlled by the left pivoting anchor valve (6) and/or the brake pressure biasing the right wheel brake actuator (51) is controlled by the right pivoting anchor valve (3).

5. Pneumatic vehicle axle brake assembly (1) of claim 4, **characterized in that** the control logic
a) determines an operational state and
b) switches from the first operating mode to the second operating mode and/or from the second operating mode to the first operating mode in dependence on the determined operational mode.

6. Pneumatic vehicle axle brake assembly (1) of claim 5, **characterized in that**
a) the first operational mode is the normal operational mode,
b) the determined operational state is the need for a generation of a yaw moment and
c) the operational mode is switched from the first operational mode to the second operational mode when the determined operational state is the detected need for a generation of a yaw moment.

7. Pneumatic vehicle axle brake assembly (1) of claim 5 or 6, **characterized in that**
a) the first operational mode is the normal operational mode,
b) the determined operational state is the detection of differing friction conditions at the right wheel and at the left wheel and
c) the operational mode is switched from the first operational mode to the second operational mode when the determined operational state is the detection of differing friction conditions at the right wheel and at the left wheel.

8. Pneumatic vehicle axle brake assembly (1) of one of claims 4 to 7, **characterized in that**
a) the first operational mode is the normal operational mode,
b) the operational mode is switched from the first operational mode to the second operational mode within a process of an application of the brake actuators (51, 52).

9. Pneumatic vehicle axle brake assembly (1) of claim 8, **characterized in that** the operational mode is switched from the first operational mode to the second operational mode
a) when a given time span of the pressurization of the brake actuators by at least one of the pivoting anchor valves (3; 7) has elapsed or
b) when reaching a pressure criterion of the brake pressures in the brake actuators (51, 52)
or
c) when reaching a friction force value at at least one of the wheel brake actuators (51, 52)
or
d) when a slip control is initiated or a slip at at least one wheel is detected.

10. Pneumatic vehicle axle brake assembly (1) of claim 5, **characterized in that**
a) the second operational mode is the normal operational mode,
b) the determined operational state is the detection of differing friction conditions at the right wheel and at the left wheel and
c) the operational mode is switched from the second operational mode to the first operational mode when the determined operational state is the detection of differing friction conditions at the right wheel and at the left wheel.

11. Pneumatic vehicle axle brake assembly (1) of claim 5 or 10, **characterized in that**
a) the second operational mode is the normal operational mode,
b) the determined operational state is a defect or failure of a control of the right pneumatic brake branch (2) or of the left pneumatic brake branch (6) and
c) the operational mode is switched from the second operational mode to the first operational mode when the determined operational state is the detection of a defect of a control of the right pneumatic brake branch (2) or of the left pneumatic brake branch (6).

12. Pneumatic vehicle axle brake assembly (1) of one of claims 4 to 11, **characterized in that** for subsequent brake applications in the first operating mode the brake pressure is alternately controlled by the right pivoting anchor valve (3) and the left pivoting anchor valve (7).

13. Pneumatic vehicle axle brake assembly (1) of one of claims 4 to 12, **characterized in that**
a) for a brake application process in the first operating mode in a first process part both pivoting anchor valves (3, 7) are controlled into the aerating position and
b) when one of the following criteria is fulfilled
- a given time span of the pressurization of the brake actuators by the pivoting anchor valves (3; 7) has elapsed,
b) a pressure criterion of the brake pressures in the brake actuators (51, 52) is fulfilled
or
c) a friction force value at at least one of the wheel brake actuators (51, 52) is reached
or
d) a slip control is initiated or a slip at at least one wheel is detected
within the same brake application process in the first operating mode in a second process part one pivoting anchor valves (3) is controlled into the closed position and the pressure is controlled by the other pivoting anchor valves (7).

14. Pneumatic vehicle axle brake assembly (1) of one of claims 4 to 13, **characterized in that** the control logic
a) in the first operating mode coordinates the control of the pivoting anchor valves (3, 7) and
b) in the second operating mode controls the pivoting anchor valves (3, 7) independently on each other.

15. Pneumatic vehicle axle brake assembly (1) of one of the preceding claims, **characterized in that** at least one of the pivoting anchor valves (3, 7) is integrated into a wheel brake unit (53, 54).

16. Pneumatic vehicle axle brake assembly (1) of one of the preceding claims, **characterized in that** the valve device (33) or a valve (59; 60) of the valve device (33) is integrated into a or the wheel brake unit (53; 54).

17. Pneumatic vehicle axle brake assembly (1) of one of the preceding claims, **characterized in that**
a) the right pivoting anchor valve (3) is integrated into a right wheel brake unit (53) and the left pivoting anchor valve (7) is integrated into a left wheel brake unit (54),
b) a first valve (59) of the valve device (33) is integrated into the right wheel brake unit (53) and a second valve (60) of the valve device (33) is integrated into the left wheel brake unit (54) and
c) the right pneumatic brake branch (2) is connected to the left pneumatic brake branch (6) by a first connecting line (32) and a second connecting line (61), the first valve (59) being arranged in the first connecting line (32) and the second valve (60) being arranged in the second connecting line (61).

18. Pneumatic vehicle axle brake assembly (1) of one of the preceding claims, **characterized in that** the valve device (33) comprises a switching state wherein the valve device (33) connects
a) a supply port (93) of the valve device (33) or
b) a brake control port (93) of the valve device (33)
to the pneumatic brake branches (2, 6).

## Patentansprüche

1. Pneumatische Fahrzeugachsen-Bremsbaugruppe (1) mit
a) einem rechten pneumatischen Bremszweig (2), der einer rechten Seite einer Fahrzeugachse zugeordnet ist und verwendet wird für die Steuerung oder Regelung des Bremsdrucks, der einen Bremsaktuator (51) eines rechten Rades beaufschlagt, wobei der rechte pneumatische Bremszweig (2) ein rechtes Schwenkankerventil (3) aufweist, und
b) einem linken pneumatischen Bremszweig (6), der einer linken Seite der Fahrzeugachse zugeordnet ist und verwendet wird zur Steuerung oder Regelung des Bremsdruckes, der einen Bremsaktuator (52) eines linken Rades beaufschlagt, wobei der linke pneumatische Bremszweig (6) ein linkes Schwenkankerventil (7) aufweist,
c) wobei der rechte pneumatische Bremszweig (2) mit dem linken pneumatischen Bremszweig (6) durch eine Ventileinrichtung (33) verbunden ist, die aufweist
ca) eine offene Stellung, die eine Verbindung des rechten pneumatischen Bremszweigs (2) mit dem Bremsaktuator (52) des linken Rades und/oder des linken pneumatischen Bremszweigs (6) mit dem Bremsaktuator (51) des rechten Rades gewährleistet, und
cb) eine geschlossene Stellung, in der
- der rechte pneumatische Bremszweig (2) durch die Ventileinrichtung (33) von dem Bremsaktuator (52) des linken Rades getrennt ist und/oder
- der linke pneumatische Bremszweig (6) durch die Ventileinrichtung (33) von dem Bremsaktuator (51) des rechten Rades getrennt ist,
d) wobei die Schwenkankerventile (3, 7) einen Schwenkanker aufweisen, der den Ventilkörper bildet oder mit dem Ventilkörper gekoppelt ist, wobei der Ventilkörper relativ zu einem Ventilsitz bewegbar ist zwischen einer geschlossenen Stellung und mindestens einer offenen Stellung und der Schwenkanker mittels einer elektromagnetischen Betätigung zwischen den unterschiedlichen Schwenkstellungen, die mit den unterschiedlichen Ventilstellungen korrelieren, verschwenkt wird.

2. Pneumatische Fahrzeugachsen-Bremsbaugruppe (1) nach Anspruch 1, **dadurch gekennzeichnet, dass** die Ventileinrichtung (33) ein 2/2-Ventil aufweist.

3. Pneumatische Fahrzeugachsen-Bremsbaugruppe (1) nach Anspruch 1 oder 2, **dadurch gekennzeichnet, dass** die Ventileinrichtung (33) ein Schwenkankerventil (33) aufweist.

4. Pneumatische Fahrzeugachsen-Bremsbaugruppe (1) nach einem der Ansprüche 1 bis 3 mit einer Steuer- oder Regeleinrichtung (31) mit Steuerlogik, wobei die Steuerlogik aufweist
a) einen ersten Betriebsmodus, in dem die Ventileinrichtung (33) in die offene Stellung gesteuert wird und der Bremsdruck, der den Bremsaktuator (52) des rechten Rades und den Bremsaktuator (51) des linken Rades beaufschlagt, durch mindestens eines der Schwenkankerventile (3, 7) gesteuert oder geregelt wird und
b) einen zweiten Betriebsmodus, in dem die Ventileinrichtung (33) in die geschlossene Stellung gesteuert wird und der Bremsdruck, der den Bremsaktuator (52) des linken Rades beaufschlagt, durch das linke Schwenkankerventil (6) gesteuert oder geregelt wird, und/oder der Bremsdruck, der den Bremsaktuator (51) des rechten Rades beaufschlagt, durch das rechte Schwenkankerventil (3) gesteuert oder geregelt wird.

5. Pneumatische Fahrzeugachsen-Bremsbaugruppe (1) nach Anspruch 4, **dadurch gekennzeichnet, dass** die Steuerlogik
a) einen Betriebszustand ermittelt und
b) eine Umschaltung von dem ersten Betriebsmodus in den zweiten Betriebsmodus und/oder von dem zweiten Betriebsmodus in den ersten Betriebsmodus in Abhängigkeit von dem ermittelten Betriebszustand vornimmt.

6. Pneumatische Fahrzeugachsen-Bremsbaugruppe (1) nach Anspruch 5, **dadurch gekennzeichnet, dass**
a) der erste Betriebsmodus der Normal-Betriebsmodus ist,
b) der ermittelte Betriebszustand der Bedarf zur Erzeugung eines Giermomentes ist und
c) der Betriebsmodus von dem ersten Betriebsmodus in den zweiten Betriebsmodus umgeschaltet wird, wenn der ermittelte Betriebszustand ein detektierter Bedarf einer Erzeugung eines Giermomentes ist.

7. Pneumatische Fahrzeugachsen-Bremsbaugruppe (1) nach Anspruch 5 oder 6, **dadurch gekennzeichnet, dass**
a) der erste Betriebsmodus der Normal-Betriebsmodus ist,
b) der ermittelte Betriebszustand die Detektierung unterschiedlicher Reibbedingungen an dem rechten Rad und an dem linken Rad ist und
c) der Betriebsmodus umgeschaltet wird von dem ersten Betriebsmodus in den zweiten Betriebsmodus, wenn der ermittelte Betriebszustand die Detektierung unterschiedlicher Reibbedingungen an dem rechten und linken Rad ist.

8. Pneumatische Fahrzeugachsen-Bremsbaugruppe (1) nach einem der Anspruch 4 bis 7, **dadurch gekennzeichnet, dass**
a) der erste Betriebsmodus der Normal-Betriebsmodus ist,
b) der Betriebsmodus während des Vorgangs der Betätigung der Bremsaktuatoren (51, 52) umgeschaltet wird von dem ersten Betriebsmodus in den zweiten Betriebsmodus.

9. Pneumatische Fahrzeugachsen-Bremsbaugruppe (1) nach Anspruch 8, **dadurch gekennzeichnet, dass** der Betriebsmodus von dem ersten Betriebsmodus in den zweiten Betriebsmodus umgeschaltet wird,
a) wenn eine vorgegebene Zeitspanne der Druckbeaufschlagung der Bremsaktuatoren durch zumindest eines der Schwenkankerventile (3; 7) verstrichen ist oder
b) wenn ein Druckkriterium der Bremsdrücke in den Bremsaktuatoren (51, 52) erfüllt ist oder
c) wenn ein Reibkraftwert an mindestens einem der Bremsaktuatoren (51, 52) erreicht ist oder
d) wenn eine Schlupfregelung initiiert wird oder ein Schlumpf an mindestens einem Rad detektiert wird.

10. Pneumatische Fahrzeugachsen-Bremsbaugruppe (1) nach Anspruch 5, **dadurch gekennzeichnet, dass**
a) der zweite Betriebsmodus der Normal-Betriebsmodus ist,
b) der ermittelte Betriebszustand die Detektierung unterschiedlicher Reibzustände an dem rechten und an dem linken Rad ist und
c) der Betriebsmodus von dem zweiten Betriebsmodus in den ersten Betriebsmodus umgeschaltet wird, wenn der ermittelte Betriebszustand die Detektierung unterschiedlicher Reibbedingungen an dem rechten und linken Rad ist.

11. Pneumatische Fahrzeugachsen-Bremsbaugruppe (1) nach Anspruch 5 oder 10, **dadurch gekennzeichnet, dass**
a) der zweite Betriebsmodus der Normal-Betriebsmodus ist,
b) der ermittelte Betriebszustand ein Defekt oder ein Versagen einer Steuerung oder Regelung des rechten pneumatischen Bremszweigs (2) oder des linken pneumatischen Bremszweigs (6) ist und
c) der Betriebsmodus von dem zweiten Betriebsmodus in den ersten Betriebsmodus umgeschaltet wird, wenn der detektierte Betriebszustand die Detektierung eines Defekts der Steuerung oder Regelung des rechten pneumatischen Bremszweigs (2) oder des linken pneumatischen Bremszweigs (6) ist.

12. Pneumatische Fahrzeugachsen-Bremsbaugruppe (1) nach einem der Ansprüche 4 bis 11, **dadurch gekennzeichnet, dass** für nachfolgende Bremsbetätigungen in dem ersten Betriebsmodus der Bremsdruck alternierend von dem rechten Schwenkankerventil (3) und dem linken Schwenkankerventil (7) gesteuert oder geregelt wird.

13. Pneumatische Fahrzeugachsen-Bremsbaugruppe (1) nach einem der Ansprüche 4 bis 12, **dadurch gekennzeichnet, dass**
a) für einen Bremsbetätigungsvorgang in dem ersten Betriebsmodus in einem ersten Verfahrensabschnitt beide Schwenkankerventile (3, 7) in die Belüftungsstellung gesteuert werden und
b) wenn eines der folgenden Kriterien erfüllt ist:
- eine vorgegebene Zeitspanne der Druckbeaufschlagung der Bremsaktuatoren durch die Schwenkankerventile (3; 7) ist verstrichen,
b) ein Druckkriterium der Bremsdrücke in den Bremsaktuatoren (51, 52) ist erfüllt
oder
c) ein Reibkraftwert an mindestens einem der Bremsaktuatoren (51, 52) ist erreicht
oder
d) die Schlupfregelung wird begonnen oder ein Schlumpfwird an mindestens einem Rad detektiert
in demselben Bremsbetätigungsverfahren in dem ersten Betriebsmodus in einem zweiten Verfahrensabschnitt ein Schwenkankerventil (3) in die geschlossene Stellung gesteuert wird und der Druck durch das andere Schwenkankerventil (7) gesteuert oder geregelt wird.

14. Pneumatische Fahrzeugachsen-Bremsbaugruppe (1) nach einem der Ansprüche 4 bis 13, **dadurch gekennzeichnet, dass** die Steuerlogik
a) in dem ersten Betriebsmodus die Steuerung oder Regelung der Schwenkankerventile (3, 7) koordiniert und
b) in dem zweiten Betriebsmodus die Schwenkankerventile (3, 7) unabhängig voneinander steuert oder regelt.

15. Pneumatische Fahrzeugachsen-Bremsbaugruppe (1) nach einem der vorhergehenden Ansprüche, **dadurch gekennzeichnet, dass** mindestens eines der Schwenkankerventile (3, 7) in eine Radbremseinheit (53, 54) integriert ist.

16. Pneumatische Fahrzeugachsen-Bremsbaugruppe (1) nach einem der vorhergehenden Ansprüche, **dadurch gekennzeichnet, dass** die Ventileinrichtung (33) oder ein Ventil (59; 60) der Ventileinrichtung (33) in eine oder die Radbremseinheit (53; 54) integriert ist.

17. Pneumatische Fahrzeugachsen-Bremsbaugruppe (1) nach einem der vorhergehenden Ansprüche, **dadurch gekennzeichnet, dass**
a) das rechte Schwenkankerventil (3) in eine rechte Radbremseinheit (53) integriert ist und das linke Schwenkankerventil (7) in eine linke Radbremseinheit (54) integriert ist,
b) ein erstes Ventil (59) der Ventileinrichtung (33) in die rechte Radbremseinheit (53) integriert ist und ein zweites Ventil (60) der Ventileinrichtung (33) in die linke Radbremseinheit (54) integriert ist und
c) der rechte pneumatische Bremszweig (2) mit dem linken pneumatischen Bremszweig durch eine erste Verbindungsleitung (32) und eine zweite Verbindungsleitung (61) verbunden ist, wobei das erste Ventil (59) in der ersten Verbindungsleitung (32) angeordnet ist und das zweite Ventil (60) in der zweiten Verbindungsleitung (61) angeordnet ist.

18. Pneumatische Fahrzeugachsen-Bremsbaugruppe (1) nach einem der vorhergehenden Ansprüche, **dadurch gekennzeichnet, dass** die Ventileinrichtung (33) einen Schaltzustand aufweist, in dem die Ventileinrichtung (33)
a) einen Versorgungsanschluss (93) der Ventileinrichtung (33) oder
b) einen Bremssteueranschluss oder Bremsregelanschluss (93) der Ventileinrichtung (33)
mit den pneumatischen Bremszweigen (2, 6) verbindet.

## Revendications

1. Ensemble de frein pneumatique d'essieu de véhicule (1) comprenant
a) un embranchement de frein pneumatique de droite (2) associé à un côté droit d'un essieu de véhicule et utilisé pour contrôler la pression de freinage qui agit sur un cylindre de frein de roue de droite (51), l'embranchement de frein pneumatique de droite (2) comprenant une soupape à ancrage qui pivote vers la droite (3), et
b) un embranchement de frein pneumatique de gauche (6) associé à un côté gauche de l'essieu de véhicule et utilisé pour contrôler la pression de freinage qui agit sur un cylindre de frein de roue de gauche (52), l'embranchement de frein pneumatique de gauche (6) comprenant une soupape d'encrage qui pivote vers la gauche (7),
c) dans lequel l'embranchement de frein pneumatique de droite (2) est relié à l'embranchement de frein pneumatique de gauche (6) par un dispositif de soupape (33) qui comprend
ca) une position ouverte qui permet une liaison de l'embranchement de frein pneumatique de droite (2) au cylindre de frein de roue de gauche (52) et/ou de l'embranchement de frein pneumatique de gauche (6) au cylindre de frein de roue de droite (51), et
cb) une position fermée dans laquelle
- l'embranchement de frein pneumatique de droite (2) est séparé par le dispositif de soupape (33) du cylindre de frein de roue de gauche (52), et/ou
- l'embranchement de frein pneumatique de gauche (6) est séparé par le dispositif de soupape (33) du cylindre de frein de roue de droite (51),
d) les soupapes d'ancrage pivotantes (3, 7) comprenant un ancrage pivotant qui forme le corps de soupape ou est couplé au corps de soupape, le corps de soupape se déplaçant par rapport à un siège de soupape entre une position fermée et au moins une position ouverte et l'ancrage pivotant étant pivoté par un déclenchement électromagnétique dans différentes positions de pivotement qui sont corrélées à différentes positions de soupape.

2. Ensemble de frein pneumatique d'essieu de véhicule (1) selon la revendication 1, **caractérisé en ce que** le dispositif de soupape (33) comprend une soupape 2/2.

3. Ensemble de frein pneumatique d'essieu de véhicule (1) selon la revendication 1 ou 2, **caractérisé en ce que** le dispositif de soupape (33) comprend une soupape à ancrage pivotant (35).

4. Ensemble de frein pneumatique d'essieu de véhicule (1) selon l'une des revendications 1 à 3, comprenant un dispositif de commande (31) avec une logique de commande, la logique de commande comprenant
a) un premier mode de fonctionnement dans lequel le dispositif de soupape (33) est contrôlé en position ouverte et la pression de freinage qui agit sur le cylindre de frein de roue de gauche (52) et le cylindre de frein de roue de droite (51) est contrôlée par au moins l'une des soupapes à ancrage pivotant (3, 7), et
b) un second mode de fonctionnement dans lequel le dispositif de soupape (33) est contrôlé en position fermée et la pression de freinage qui agit sur le cylindre de frein de roue de gauche (52) est contrôlée par la soupape à ancrage qui pivote vers la gauche (6) et/ou la pression de freinage qui agit sur le cylindre de frein de roue de droite (51) est contrôlée par la soupape à ancrage qui pivote vers la droite (3).

5. Ensemble de frein pneumatique d'essieu de véhicule (1) selon la revendication 4, **caractérisé en ce que** la logique de commande
a) détermine un état de fonctionnement, et
b) passe du premier mode de fonctionnement au second mode de fonctionnement et/ou du second mode de fonctionnement au premier mode de fonctionnement selon le mode de fonctionnement déterminé.

6. Ensemble de frein pneumatique d'essieu de véhicule (1) selon la revendication 5, **caractérisé en ce que**
a) le premier mode de fonctionnement est le mode de fonctionnement normal,
b) l'état de fonctionnement déterminé correspond à la nécessité de génération d'un moment de lacet, et
c) le mode de fonctionnement passe du premier mode de fonctionnement au second mode de fonctionnement lorsque l'état de fonctionnement déterminé correspond au besoin détecté de génération d'un moment de lacet.

7. Ensemble de frein pneumatique d'essieu de véhicule (1) selon la revendication 5 ou 6, **caractérisé en ce que**
a) le premier mode de fonctionnement est le mode de fonctionnement normal,
b) l'état de fonctionnement déterminé est la détection de conditions de frottement différentes au niveau de la roue de droite et de la roue de gauche, et
c) le mode de fonctionnement passe du premier mode de fonctionnement au second mode de fonctionnement lorsque l'état de fonctionnement déterminé est la détection de conditions de frottement différentes au niveau de la roue de droite et de la roue de gauche.

8. Ensemble de frein pneumatique d'essieu de véhicule (1) selon l'une des revendications 4 à 7, **caractérisé en ce que**
a) le premier mode de fonctionnement est le mode de fonctionnement normal,
b) le mode de fonctionnement passe du premier mode de fonctionnement au second mode de fonctionnement dans le cadre d'un processus d'application des cylindres de frein (51, 52).

9. Ensemble de frein pneumatique d'essieu de véhicule (1) selon la revendication 8, **caractérisé en ce que** le mode de fonctionnement passe du premier mode de fonctionnement au second mode de fonctionnement
a) lorsqu'un intervalle de temps donné de la pressurisation des cylindres de frein par au moins l'une des soupapes à ancrage pivotant (3 ; 7) s'est écoulé, ou
b) lorsqu'un critère de pression des pressions de freinage dans les cylindres de frein (51, 52) est atteint, ou
c) lorsqu'une valeur de force de frottement au niveau d'au moins l'un des cylindres de frein de roues (51, 52) est atteinte, ou
d) lorsqu'une commande anti-patinage est déclenchée ou un patinage au niveau d'au moins une roue est détecté.

10. Ensemble de frein pneumatique d'essieu de véhicule (1) selon la revendication 5, **caractérisé en ce que**
a) le second mode de fonctionnement est le mode de fonctionnement normal,
b) l'état de fonctionnement déterminé est la détection de conditions de frottement différentes au niveau de la roue de droite et de la roue de gauche, et
c) le mode de fonctionnement passe du second mode de fonctionnement au premier mode de fonctionnement lorsque l'état de fonctionnement déterminé est la détection de conditions de frottement différentes au niveau de la roue de droite et de la roue de gauche.

11. Ensemble de frein pneumatique d'essieu de véhicule (1) selon la revendication 5 ou 10, **caractérisé en ce que**
a) le second mode de fonctionnement est le mode de fonctionnement normal,
b) l'état de fonctionnement déterminé est un défaut ou une défaillance d'une commande de l'embranchement de frein pneumatique de droite (2) ou de l'embranchement de frein pneumatique de gauche (6), et
c) le mode de fonctionnement passe du second mode de fonctionnement au premier mode de fonctionnement lorsque l'état de fonctionnement déterminé est la détection d'un défaut d'une commande de l'embranchement de frein pneumatique de droite (2) ou de l'embranchement de frein pneumatique de gauche (6).

12. Ensemble de frein pneumatique d'essieu de véhicule (1) selon l'une des revendications 4 à 11, **caractérisé en ce que**, pour les applications de frein ultérieures dans le premier mode de fonctionnement, la pression de freinage est contrôlée en alternance par la soupape à ancrage qui pivote vers la droite (3) et la soupape à ancrage qui pivote vers la gauche (7).

13. Ensemble de frein pneumatique d'essieu de véhicule (1) selon l'une des revendications 4 à 12, **caractérisé en ce que**
a) pour un processus d'application de frein dans le premier mode de fonctionnement lors d'une première partie de processus, les soupapes à ancrage qui pivote (3, 7) sont contrôlées dans la position d'aération, et
b) lorsque l'un des critères suivants est satisfait
- un intervalle de temps donné de la pressurisation des cylindres de frein par les soupapes à ancrage qui pivote (3 ; 7) s'est écoulé,
b) un critère de pression des pressions de freinage dans les cylindres de frein (51, 52) est satisfait
ou
c) une force de frottement au niveau d'au moins l'un des cylindres de frein de roues (51, 52) est atteinte,
ou
d) une commande anti-patinage est déclenchée ou un patinage au niveau d'au moins une roue est détecté au cours du même processus de d'application de frein dans le premier mode de fonctionnement lors d'une seconde partie du processus, une soupape à ancrage qui pivote (3) est contrôlée en position fermée et la pression est contrôlée par l'autre soupape à ancrage qui pivote (7).

14. Ensemble de frein pneumatique d'essieu de véhicule (1) selon l'une des revendications 4 à 13, **caractérisé en ce que** la logique de commande
a) dans le premier mode de fonctionnement, coordonne le contrôle des soupapes à ancrage pivotant (3, 7), et
b) dans le second mode de fonctionnement, contrôle les soupapes à ancrage pivotant (3, 7) indépendamment les unes des autres.

15. Ensemble de frein pneumatique d'essieu de véhicule (1) selon l'une des revendications précédentes, **caractérisé en ce qu'**au moins l'une des soupapes à ancrage pivotant (3, 7) est intégrée à une unité de frein de roue (53, 54).

16. Ensemble de frein pneumatique d'essieu de véhicule (1) selon l'une des revendications précédentes, **caractérisé en ce que** le dispositif de soupape (33) ou une soupape (59 ; 60) du dispositif de soupape (33) est intégré(e) à une ou à l'unité de frein de roue (53 ; 54).

17. Ensemble de frein pneumatique d'essieu de véhicule (1) selon l'une des revendications précédentes, **caractérisé en ce que**
a) la soupape à ancrage qui pivote vers la droite (3) est intégrée à une unité de frein de roue de droite (53) et la soupape à ancrage qui pivote vers la gauche (7) est intégrée à une unité de frein de roue de gauche (54),
b) une première soupape (59) du dispositif de soupape (33) est intégrée à l'unité de frein de roue de droite (53) et une seconde soupape (60) du dispositif de soupape (33) est intégrée à l'unité de frein de roue de gauche (54), et
c) l'embranchement de frein pneumatique de droite (2) est relié à l'embranchement de frein pneumatique de gauche (6) par un premier flexible de liaison (32) et un second flexible de liaison (61), la première soupape (59) étant prévue dans le premier flexible de liaison (32) et la seconde soupape (60) étant prévue dans le second flexible de liaison (61).

18. Ensemble de frein pneumatique d'essieu de véhicule (1) selon l'une des revendications précédentes, **caractérisé en ce que** le dispositif à soupape (33) comprend un état de commutation dans lequel le dispositif à soupape (33) relie
a) un orifice d'alimentation (93) du dispositif de soupape (33) ou
b) un orifice de commande de frein (93) du dispositif de soupape (33)
aux embranchements de frein pneumatique (2, 6).
